# EUROPÄISCHE PATENTANMELDUNG

(11) **EP 4 391 327 A1**
(43) Veröffentlichungstag der Anmeldung: **26.06.2024**
(21) Anmeldenummer: 23215860.0
(22) Anmeldetag: 12.12.2023
(51) Int. Cl.: H02K 9/197, H02K 1/20, H02K 3/24, H02K 21/24

(54) **FLÜSSIGKEITSGEKÜHLTE AXIALFLUSSMASCHINE**

(30) Priorität: 22.12.2022 DE 102022214345
(71) Anmelder: Baumüller Nürnberg GmbH, 90482 Nürnberg (DE)
(72) Erfinder: ZILLES, Nathalie, 90482 Nürnberg (DE); KOSTKA, Uwe, 90482 Nürnberg (DE)
(74) Vertreter: FDST Patentanwälte

(57) **Zusammenfassung**

Die Erfindung betrifft eine flüssigkeitsgekühlte Axialflussmaschine (14) mit einem um eine Achse (22) drehbaren Rotor (46) und einem um die Achse (22) angeordneten ringförmigen Stator (54), die zueinander parallel zur Achse (22) versetzt sind. Der Stator (54) ist in einem ersten Raum (34) eines Gehäuses (24) und der Rotor (46) in einem zweiten Raum (48) des Gehäuses (24) angeordnet, die mittels einer Spaltscheibe (50) begrenzt und fluidtechnisch zueinander getrennt sind. Ferner betrifft die Erfindung ein Kraftfahrzeug (2).

## Beschreibung

Die Erfindung betrifft eine flüssigkeitsgekühlte Axialflussmaschine, die einen um eine Achse drehbaren Rotor und einem um die Achse angeordneten ringförmigen Stator umfasst, die zueinander parallel zur Achse versetzt sind. Ferner betrifft die Erfindung ein Kraftfahrzeug.

Elektrische Maschinen, also Elektromotoren und Generatoren, weisen üblicherweise einen Stator und einen diesbezüglich um eine Achse drehbaren Rotor auf, der mittels Lagern, wie Wälzlagern, gelagert ist. Üblicherweise sind der Rotor und der Stator in einem gemeinsamen Gehäuse angeordnet, sodass diese vor Fremdpartikeln geschützt sind. Auch ist auf diese Weise ein Berührschutz gegeben.

Es ist prinzipiell möglich, die elektrische Maschine als Radialflussmaschine oder Axialflussmaschine auszugestalten. Bei der Radialflussmaschine umgibt der Rotor den Stator umfangsseitig bzw. umgekehrt, sodass diese entweder als Innenläufer oder Außenläufer ausgestaltet ist. Die zwischen dem Rotor und dem Stator wechselwirkenden Magnetfelder verlaufen zwischen diesen dabei im Wesentlichen in radialer Richtung. Falls mittels der elektrischen Maschine dabei ein vergleichsweise hohes Drehmoment bereitgestellt werden soll, ist es erforderlich, einen vergleichsweise großen Abstand zwischen der Achse und dem Bereich des Übergangs zwischen dem Rotor und dem Stator zu wählen. Dies führt somit zu einem vergleichsweise großen Durchmesser des Elektromotors. Bei der Axialflussmaschine hingegen sind der Rotor und der Stator zueinander entlang der Achse versetzt, und die zwischen dem Stator und dem Rotor wirkenden Magnetfelder verlaufen im Wesentlichen in Axialrichtung. Somit ist es möglich, die elektrische Maschine mit einer vergleichsweise geringen radialen Ausdehnung auszugestalten.

Wenn mittels der elektrischen Maschine hohe Leistungen bereitgestellt werden sollen, sind vergleichsweise hohe über die elektrische Maschine fließenden Ströme erforderlich. Infolgedessen sind auch die entstehenden elektrischen Verluste ebenfalls hoch, was zu einer Erwärmung der elektrischen Maschine führt. Um hierbei eine Zerstörung der elektrischen Maschine zu vermeiden, ist es erforderlich diese aktiv zu kühlen, da eine Abgabe der Wärme lediglich an die Umgebungsluft nicht ausreichend ist. Zum Kühlen wird meist eine Kühlflüssigkeit, wie Öl oder Wasser, herangezogen, mittels derer die überschüssige Wärme abtransportiert werden soll. Bei einer Axialflussmacheine sind hierfür üblicherweise in das Gehäuse mehrere Kühlkanäle eingebracht, durch die die Kühlflüssigkeit geführt wird.

Nachteilig hieran ist, dass nicht direkt die Komponenten, die aufgrund der elektrischen Verluste erwärmt werden, gekühlt werden, sodass bei einer lokalen Überlastung keine direkte Kühlung möglich ist, und ggf. eine der Komponenten beschädigt wird. Auch ist eine thermische Kopplung zwischen den Komponenten und dem Gehäuse erforderlich, was eine Gestaltungsfreiheit einschränkt. Damit ein möglichst großes Kühlflüssigkeitsvolumen durch die Kühlkanäle geführt werden kann, ist es erforderlich, eine Länge dieser zu erhöhen, was eine Konstruktion und eine Erstellung erschwert. Auch sind die Verfahren, die zur Herstellung des Gehäuses verwendet werden können, begrenzt.

Der Erfindung liegt die Aufgabe zugrunde, eine besonders geeignete Axialflussmaschine als auch ein besonders geeignetes Kraftfahrzeug anzugeben, wobei vorteilhafterweise eine Herstellung und/oder Konstruktion vereinfacht sind, und wobei zweckmäßigerweise ein Wirkungsgrad und/oder eine bereitgestellte Leistung erhöht sind.

Hinsichtlich der Axialflussmaschine wird diese Aufgabe durch die Merkmale des Anspruchs 1 und hinsichtlich des Kraftfahrzeugs durch die Merkmale des Anspruchs 10 erfindungsgemäß gelöst. Vorteilhafte Weiterbildungen und Ausgestaltungen sind Gegenstand der jeweiligen Unteransprüche.

Die Axialflussmaschine ist beispielsweise ein Generator oder besonders bevorzugt ein Elektromotor. Insbesondere ist es möglich, die Axialflussmaschine sowohl generatorisch als auch elektromotorisch zu betreiben, und die Axialflussmaschine ist hierfür geeignet, insbesondere vorgesehen und eingerichtet. Insbesondere weist die Axialflussmaschine eine Maximal- oder Nennleistung zwischen 100 kW und 500 kW, und vorzugsweise von 200 kW, auf. Besonders bevorzugt weist die Axialflussmaschine ein Maximal- oder Nenndrehmoment zwischen 800 Nm und 1800 Nm, zwischen 1000 Nm und 1500 Nm, bevorzugt von 1200 Nm, auf.

Beispielsweise ist die Axialflussmaschine geeignet, insbesondere vorgesehen und eingerichtet, Bestandteil einer Anlage, wie einer Industrieanlage zu sein. Zum Beispiel wird mittels der Axialflussmaschine ein Aktor betrieben, mittels dessen eine Bearbeitung und/oder Erstellung eines Werkstücks erfolgt. Alternativ oder in Kombination hierzu wird mittels der Axialflussmaschine eine Transportvorrichtung betrieben.

Besonders bevorzugt jedoch ist im Montagezustand die Axialflussmaschine ein Bestandteil eines Kraftfahrzeugs. Das Kraftfahrzeug ist beispielsweise landgebundenen und zum Beispiel ein Nutzkraftwagen, wie ein Lastkraftwagen (Lkw) oder ein Bus, eine Landmaschine, eine Baumaschine, eine Pistenraupe oder ein Personenkraftwagen (Pkw). In einer Alternative hierzu ist die Axialflussmaschine ein Bestandteil eines Flugzeugs oder Hubschraubers. Besonders bevorzugt jedoch ist die Axialflussmaschine im Montagezustand ein Bestandteil eines Schiffs oder Boots.

Besonders bevorzugt ist die Axialflussmaschine ein Bestandteil eines Hauptantriebs, mittels dessen insbesondere eine Fortbewegung des Kraftfahrzeugs erstellt oder zumindest unterstützt wird. Sofern die Axialflussmaschine dabei ein Bestandteil eines Schiffs/Boots ist, wird mittels dieser über eine Schiffswelle eine oder mehrere Schiffsschrauben angetrieben. In einer Alternative hierzu ist die Axialflussmaschine beispielsweise in einer Triebwerksgondel oder dergleichen angeordnet.

Die Axialflussmaschine weist einen um eine Achse drehbaren Rotor auf. Zweckmäßigerweise umfasst die Axialflussmaschine eine Welle, die geeigneterweise drehbar gelagert ist, und die konzentrisch zu und auf der Achse angeordnet ist. Insbesondere ist die Welle aus einem Stahl erstellt. Zweckmäßigerweise ist an der Welle der Rotor angebunden, wie ein Blechpaket oder zumindest Magneten, insbesondere Permanentmagnete. Vorzugsweise sind sämtliche etwaige Permanentmagneten in das etwaige Blechpaket eingebettet oder zumindest mittels dessen gehalten.

Die Axialflussmaschine weist ferner einen Stator auf, der ringförmig ist, und der um die Achse angeordnet ist, sodass der Stator die Achse umgibt. Geeigneterweise ist der ringförmige Stator konzentrisch zur Achse angeordnet. Vorzugsweise umgibt der Stator die etwaige Welle umfangsseitig. Der Stator weist geeigneterweise einen oder mehrere Magneten auf, besonders bevorzugt Elektromagneten. Insbesondere ist jeder Elektromagnet mittels einer elektrischen Spule gebildet, die zum Beispiel auf einen Kern gewickelt ist, der mittels weiterer Komponenten des Stators bereitgestellt ist, wie einem Blechpaket.

Der Rotor und der Stator sind zueinander parallel zur Achse versetzt, also in Axialrichtung, die auch als axiale Richtung bezeichnet ist. Insbesondere sind hierbei die etwaigen Magneten des Rotors und des Stators derart angeordnet, dass bei Betrieb sich zwischen diesen ein Magnetfeld im Wesentlichen parallel zur Achse ergibt. Besonders bevorzugt sind der Rotor und der Stator zueinander deckungsgleich angeordnet, sodass eine Projektion des Rotors auf den Stator entlang der Achse oder umgekehrt jeweils zu einer Überdeckung führt. Somit ist ein Platzbedarf verringert.

Die Axialflussmaschine weist ein Gehäuse mit einem ersten Raum und einem zweiten Raum auf, die parallel zur Achse zueinander versetzt sind. Mit anderen Worten sind die beiden Räume axial versetzt zueinander angeordnet. In dem ersten Raum ist der Stator und in dem zweiten Raum der Rotor angeordnet. Die beiden Räume sind dabei mittels einer Spaltscheibe begrenzt, die insbesondere senkrecht zur Achse angeordnet ist. Mit anderen Worten ist zwischen den beiden Räumen die Spaltscheibe angeordnet, und mittels dieser werden die beiden Räume auf der jeweils zugewandten Seite begrenzt. Dabei erfolgt mittels der Spaltscheibe zudem eine fluidtechnische Trennung der beiden Räume zueinander. Mit anderen Worten ist ein Übertritt eines Fluids oder zumindest einer Flüssigkeit zwischen den beiden Räumen mittels der Spaltscheibe unterbunden. Insbesondere wird mittels der Spaltscheibe insbesondere ein Durchtritt einer Flüssigkeit verhindert.

Die Axialflussmaschine ist flüssigkeitsgekühlt. Mit anderen Worten wird bei Betrieb durch die Axialflussmaschine eine Kühlflüssigkeit geleitet, mittels derer eine überschüssige Wärme abtransportiert wird. Hierfür ist die Axialflussmaschine geeignet, insbesondere vorgesehen und eingerichtet. Zusammenfassend handelt es sich bei der Axialflussmaschine um eine flüssigkeitsgekühlte Axialflussmaschine, die im Weiteren jedoch auch weiterhin lediglich als Axialflussmaschine bezeichnet wird. Vorzugsweise ist hierbei der erste Raum geeignet, insbesondere vorgesehen und eingerichtet, an einen Kühlkreislauf angeschlossen zu werden. Zweckmäßigerweise ist im Betriebszustand in dem ersten Raum eine Kühlflüssigkeit angeordnet, und der erste Raum weist insbesondere Mittel zur fluidtechnischen Kopplung mit weiteren Komponenten des etwaigen Kühlkreislaufs auf. Zusammenfassend ist der erste Raum derart ausgebildet, dass bei Betrieb durch diesen eine Kühlflüssigkeit geführt wird, mittels derer insbesondere ein Abtransport von überschüssiger Wärme erfolgt. Vorzugsweise ist dabei die Axialflussmaschine derart ausgebildet, dass der Stator mittels der Kühlflüssigkeit zumindest teilweise umspült wird. Der Rotor hingegen wird bei Betrieb zweckmäßigerweise nicht mit der Kühlflüssigkeit beaufschlagt, und der zweite Raum ist frei von der Kühlflüssigkeit.

Aufgrund der Ausgestaltung ist es somit möglich, mittels der Kühlflüssigkeit überschüssige Wärme von dem Stator direkt abzuführen, sodass eine Überhitzung des Stators auch bei einer kurzzeitigen Überlastung des Stators vermieden ist. Mit anderen Worten ist eine Effizienz der Kühlung des Stators verbessert, und es ist beispielsweise möglich, diesen aus vergleichsweise kostengünstigen Materialien zu fertigen. Ferner ist es möglich, eine Leistung der Axialflussmaschine zu erhöhen. Der Rotor ist fluidtechnisch von dem Stator getrennt und nicht in Kontakt mit der Kühlflüssigkeit, die zum Kühlen des Stators verwendet wird. Infolgedessen entstehen keine Planschverluste, weswegen ein Wirkungsgrad erhöht ist. Ferner ist es auf diese Weise nicht erforderlich in das Gehäuse mehrere Kühlkanäle einzubringen, sodass einerseits eine Herstellung des Gehäuses vereinfacht ist. Andererseits ist es möglich, unterschiedlichste Herstellungsmethoden zu verwenden.

Das Gehäuse ist vorzugsweise aus einem Metall erstellt, was eine Robustheit erhöht. Auch ist auf diese Weise ein zusätzliches Abführen von Wärme über das Gehäuse ermöglicht. Beispielsweise ist das Gehäuse zumindest teilweise aus einem Stahl oder besonders bevorzugt aus einem Aluminium gefertigt. Auf diese Weise ist eine Robustheit vergleichsweise hoch, wobei ein Gewicht verringert ist.

Die Spaltscheibe ist beispielsweise aus einem Metall gefertigt. Auf diese Weise ist eine Robustheit erhöht. Besonders bevorzugt jedoch ist die Spaltscheibe aus einem Kunststoff gefertigt, zweckmäßigerweise einem glasfaserverstärkten Material, wie glasfaserverstärkten Kohlenstoff. Auf diese Weise ist ein Gewicht verringert. Bevorzugt ist die Spaltscheibe aus einem glasfaserverstärkten Kunststoff erstellt, wobei als Kunststoff zum Beispiel Polyamid verwendet wird. Auf diese Weise ist eine Robustheit erhöht, wobei die Spaltscheibe elektrisch nichtleitend ist. Somit ist ein gewünschter oder ungewünschter Kontakt mit stromführenden Bestandteilen des Stators oder des Rotors möglich, wobei ein elektrischer Kurzschluss vermieden ist. Besonders bevorzugt weist die Spaltscheibe eine vergleichsweise geringe Dicke auf, also eine geringe Ausdehnung entlang der Achse. Insbesondere ist diese zwischen 0,5 mm und 2 mm und geeigneterweise gleich 1 mm. Somit ist eine Baulänge der Axialflussmaschine entlang der Achsen nicht oder lediglich vergleichsweise gering vergrößert. Besonders bevorzugt weist der Rotor zu dem Stator oder der Spaltscheibe einem Abstand zwischen 1 mm und 5 mm und geeigneterweise von im Wesentlichen 2 mm auf. Auf diese Weise ist eine Wechselwirkung der zwischen dem Rotor und dem Stator wirkenden Magnetfelder vergrößert und somit auch ein Nenndrehmoment. Ferner ist eine Baulänge der Axialflussmaschine verkürzt.

Beispielsweise ist das Gehäuse einstückig ausgestaltet. Besonders bevorzugt jedoch weist das Gehäuse einen ersten Teil und einen zweiten Teil auf, die zwei zueinander separate Komponenten sind, und die im Montagezustand vorzugsweise aneinander angebunden, zweckmäßigerweise befestigt, sind. Mittels des ersten Teils ist der erste Raum bereitgestellt. Beispielsweise umfasst das Gehäuse noch weitere Komponenten, die zur Bildung des ersten Raums erforderlich sind. Alternativ hierzu ist der erste Raum lediglich mittels des ersten Teils gebildet. Der erste Teil ist topfförmig ausgestaltet. Dabei ist der Topfboden vorzugsweise im Wesentlichen senkrecht zur Achse angeordnet, und die Öffnung des topfförmigen ersten Teils weist in Richtung des zweiten Teils. Beispielsweise ist die Spaltscheibe zumindest teilweise in den topfförmigen ersten Teil eingelegt. Bevorzugt jedoch ist im Montagezustand die Spaltscheibe auf die Topföffnung aufgesetzt, sodass der erste Teil mittels der Spaltscheibe zumindest teilweise verschlossen ist. Hierbei ist die Spaltscheibe auf einen umlaufenden Rand des ersten Teils aufgesetzt, sodass diese mittels des Rands stabilisiert wird. Aufgrund des Aufsetzens auf den umlaufenden Rand ist die Position der Spaltscheibe vorgegeben, sodass eine Montage vereinfacht ist. Zum Beispiel ist die Spaltscheibe lediglich auf den Rand aufgelegt oder besonders bevorzugt dort befestigt, vorzugsweise mittels eines Klebstoffs. Somit ist einerseits eine Integrität der Spaltscheibe nicht beeinträchtigt. Andererseits wird auf diese Weise die Position der Spaltscheibe bezüglich des ersten Teils stabilisiert und vorzugsweise fixiert.

Mittels des zweiten Teils ist der zweite Raum bereitgestellt. Dabei ist der zweite Raum beispielsweise lediglich mittels des zweiten Teils gebildet, oder es sind noch weitere Komponenten vorhanden, mittels derer der zweite Raum gebildet ist. Der zweite Teil ist hohlzylindrisch, sodass dieser einen hohlzylindrischen Abschnitt aufweist. Insbesondere ist der zweite Teil lediglich mittels des entsprechenden Hohlzylinders, also des hohlzylindrischen Abschnitts, gebildet. Alternativ hierzu weist der zweite Teil noch weitere Bestandteile auf, die an den Hohlzylinder angeformt und/oder befestigt sind. Der hohlzylindrische Abschnitt ist zweckmäßigerweise entlang der Achse angeordnet und konzentrisch zu dieser.

Der erste Teil und der zweite Teil sind zweckmäßiger aus einem Metall, vorzugsweise dem gleichen Metall erstellt. Somit weisen diese keine unterschiedliche Wärmeausdehnung auf, weswegen ein Betrieb und eine Konstruktion vereinfacht sind. Besonders bevorzugt ist an dem ersten Teil ein Lager gehalten, insbesondere befestigt, mittels dessen der Rotor, vorzugsweise die etwaige Welle, drehbar gelagert ist. Somit dient der erste Teil zudem als Lagerschild, weswegen eine Anzahl an benötigten unterschiedlichen Komponenten der Axialflussmaschine reduziert ist. Somit sind Herstellungskosten und eine Größe verringert.

Beispielsweise ist die Spaltscheibe lediglich stumpf auf den umlaufenden Rand aufgesetzt. Besonders bevorzugt jedoch liegt stirnseitig an dem umlaufenden Rand ein Dichtring an. Der Dichtring ist insbesondere nach Art eines O-Rings ausgestaltet und zum Beispiel aus einem Gummi oder einem Kautschuk erstellt. Hierbei ist der Dichtring insbesondere zwischen dem ersten Teil und der Spaltscheibe zumindest teilweise angeordnet, sodass mittels dessen ein Durchtritt einer Flüssigkeit zwischen dem Rand und der Spaltscheibe vermieden ist. Auch werden mittels des Dichtrings Fertigungstoleranzen ausgeglichen. Beispielsweise liegt der Dichtring direkt auf dem Rand auf. Besonders bevorzugt jedoch ist in den umlaufenden Rand eine Nut eingebracht, in der der zumindest teilweise einliegt. Somit wird die Position des Dichtrings stabilisiert, was eine Herstellung vereinfacht. Auch ist eine Baulänge in axialer Richtung verringert, also parallel zur Achse.

Besonders bevorzugt liegt der zweite Teil kraftschlüssig über die Spaltscheibe stirnseitig an dem umlaufenden Rand an. Mit anderen Worten wird mittels des zweiten Teils die Spaltscheibe gegen den umlaufenden Rand gepresst, was eine Dichtwirkung verbessert. Ferner wird insbesondere der etwaige Dichtring auf diese Weise zumindest teilweise elastisch und/oder plastisch verformt, was eine Dichtwirkung verbessert. Zusammenfassend wird mittels des zweiten Teils die Spaltscheibe an den Rand gepresst, sodass insbesondere auch eine Position der Spaltscheibe stabilisiert ist. Ferner ist aufgrund der kraftschlüssigen Anlage der zweite Teil an dem ersten Teil befestigt, weswegen eine Robustheit erhöht ist. Insbesondere sind der zweite Teil und der erste Teil mittels einer oder mehrere Schrauben aneinander befestigt. Auf diese Weise ist die zu kraftschlüssigen Anlage vorherrschende Kraft vergleichsweise genau einstellbar, weswegen eine Beschädigung der Spaltscheibe und/oder des etwaigen Dichtrings vermieden werden kann. Auch ist dabei möglich, die fluidtechnisch Abtrennung, also die fluiddichte Ausgestaltung, vergleichsweise effizient herzustellen und zu überprüfen, sodass ein Ausschuss bei der Herstellung verringert ist. Auch ist auf diese Weise eine Demontage, beispielsweise im Rahmen eine Wartung, vereinfacht.

Beispielsweise liegen der erste Teil und der zweite Teil bündig aneinander an, insbesondere an deren Umfängen. Somit ist keine Kante oder dergleichen vorhanden, weswegen ein Platzbedarf verringert und/oder ein Anlagern von Fremdpartikeln vermieden ist. Besonders bevorzugt jedoch weist der zweite Teil einen Überstand auf, mittels dessen der erste Teil umfangsseitig umgriffen ist. Der Überstand weist dabei einen größeren Abstand zur Achse als der erste Teil auf, zumindest im Vergleich zum Rand. Folglich liegt der erste Teil, insbesondere der Rand, teilweise in dem zweiten Teil ein. Somit wird der erste Teil einerseits mittels des Überstands stabilisiert, weswegen eine Robustheit erhöht ist. Andererseits ist auf diese Weise die Position der beiden Teile zueinander vorgegeben, weswegen eine Montage vereinfacht ist.

Beispielsweise ist der Überstand dabei teilweise unterbrochen, sodass ein Platz- und Materialbedarf verringert sind. Besonders bevorzugt jedoch ist der Überstand durchgehend umlaufend, was eine Robustheit erhöht. Ferner ist aufgrund des Überstands somit im Endbereich des zweiten Teils eine Stufe gebildet, sodass insbesondere eine vereinfachte Labyrinthdichtung vorhanden ist, weswegen eine Dichtigkeit weiter erhöht ist. Vorzugsweise ist zwischen dem ersten Teil und dem Überstand ein weiterer Dichtring vorhanden, der insbesondere den ersten Teil außenseitig umgibt, und der mittels des Überstands umgriffen ist. Somit ist eine Dichtigkeit weiter erhöht, und etwaige Fertigungstoleranzen werden ausgeglichen.

Zum Beispiel ist der Überstand unversehrt. Besonders bevorzugt weist der Überstand eine Öffnung auf, die insbesondere in radialer Richtung, also senkrecht zur Achse, verläuft, und die in einer Öffnung des ersten Teils mündet. Diese Öffnung reicht dabei bis in den ersten Raum, und über die Öffnungen wird bei Betrieb die etwaige Fühlflüssigkeit in den ersten Raum ein- und/oder ausgeleitet.

Beispielsweise ist der Boden des topfförmigen ersten Teils kreisförmig und mittels einer im Wesentlichen ebenen Fläche gebildet. Somit ist eine Herstellung vereinfacht. Besonders bevorzugt jedoch weist der erste Teil einen konzentrisch zur Achse angeordneten Kragen auf, der umlaufend ausgestaltet sowie innerhalb des Stators angeordnet ist. Das Ende des Kragens und der Rand des ersten Teils liegen vorzugsweise in einer gemeinsamen Ebene senkrecht zur Achse. Mittels des Kragens ist der erste Raum innenseitig begrenzt, und der erste Raum und auch der Topfboden ist somit ringförmig ausgestaltet. Die Spaltscheibe liegt zweckmä-ßigerweise stirnseitig an dem Kragen an. Somit ist auch dort ein Durchtritt einer Flüssigkeit vermieden. Vorzugsweise ist die Spaltscheibe ebenfalls ringförmig ausgestaltet, weswegen ein Platzbedarf verringert ist. Insbesondere ist mittels der Spaltscheibe umfangsseitig die etwaige Welle umgeben.

Besonders bevorzugt ist in dem zweiten Raum ein Befestigungsring angeordnet, der zweckmäßigerweise aus einem Metall, wie einem Stahl, erstellt ist. Der Befestigungsring ist an dem Kragen befestigt, beispielsweise direkt oder über weitere Bauteile. Die Spaltscheibe ist zweckmäßigerweise kraftschlüssig zwischen dem Kragen und dem Befestigungsring gehalten. Folglich wird mittels des Befestigungsrings die Spaltscheibe gegen den Kragen gepresst, sodass dort eine Dichtigkeit verbessert ist. Insbesondere ist der Befestigungsring mittels einer oder mehrere Schrauben an dem Kragen befestigt, sodass die auf die Spaltscheibe wirkenden Kraft vergleichsweise genau einstellbar ist. Insbesondere sind dabei die Schrauben derart angeordnet, dass diese nicht durch die Spaltscheibe ragen, weswegen eine mechanische Integrität dieser nicht beeinträchtigt ist. Besonders bevorzugt ist stirnseitig auf den Kragen eine Dichtung, insbesondere ein Dichtring, aufgesetzt, der beispielsweise aus einem Gummi oder Kautschuk gefertigt ist.

Dieser wird insbesondere aufgrund der wirkenden Kraft zumindest teilweise elastisch und/oder plastisch verformt, sodass eine Dichtigkeit weiter verbessert ist.

Besonders bevorzugt weist der Stator das Blechpaket auf, das insbesondere ringförmig ausgestaltet ist, und das zweckmäßigerweise konzentrisch zur Achse angeordnet ist. Hierbei sind die einzelnen Bleche insbesondere jeweils ringförmig und konzentrisch zueinander angeordnet. Das Blechpaket selbst liegt stirnseitig, also an dessen Ende in Axialrichtung, also parallel zur Achse, einerseits an der Spaltscheibe und andererseits an dem Gehäuse an. Mit anderen Worten ist das Blechpaket somit zwischen dem Gehäuse, insbesondere dem etwaigen Topfboden des etwaigen ersten Teils, und der Spaltscheibe angeordnet, vorzugsweise gehalten. Auf diese Weise wird das Blechpaket mittels des Gehäuses stabilisiert, sodass eine Robustheit erhöht ist. Ferner wird die Spaltscheibe mittels des Stators stabilisiert. Somit ist eine Robustheit dort ebenfalls erhöht.

Die Anordnung des Blechpakets ist derart, dass der erste Raum in einen das Blechpaket umgebenden ersten Teilraum und in einen innerhalb des Blechpakets liegenden zweiten Teilraum aufgeteilt ist. Der zweite Teilraum weist dabei einen geringeren Abstand zur Achse als der erste Teilraum auf. Folglich umgibt der erste Teilraum den zweiten Teilraum, wobei zwischen diesen ein Abstand gebildet ist, der mittels des Blechpakets vorgegeben ist. Insbesondere aufgrund der Anlage des Blechpakets an dem Gehäuse ist ein Durchtritt von Kühlflüssigkeit zwischen dem Gehäuse und der zugeordneten Stirnseite des Blechpakets vermieden. Zweckmäßigerweise ist auch ein Durchtritt der Kühlflüssigkeit zwischen dem Blechpaket und der Spaltscheibe an der anderen Stirnseite des Blechpakets vermieden.

Der erste Teilraum und der zweite Teilraum sind mittels mehrerer Kühlkanäle miteinander fluidtechnisch verbunden, die durch das Blechpaket ragen. Vorzugsweise weist die Axialflussmaschine einen Zulauf und einen Ablauf auf, von denen einer dem erste Teilraum und der andere dem zweiten Teilraum zugeordnet ist. Insbesondere verlaufen diese durch das Gehäuse in den jeweiligen Teilraum. Bei Betrieb wird das Kühlfluid in einen der Teilräume eingeleitet und von diesem durch das Blechpaket zu dem anderen Teilraum sowie von dort aus dem Gehäuse herausgeleitet. Insbesondere bilden der Zulauf und der Ablauf jeweils einen Anschluss an den etwaigen Kühlkreislauf. Somit wird bei Betrieb das Blechpaket außenseitig und innenseitig sowie aufgrund der Kühlkanäle auch im Inneren mit der Kühlflüssigkeit beaufschlagt, weswegen eine vergleichsweise effiziente Kühlung des Blechpakets erfolgt.

Beispielsweise ist lediglich einer oder zwei derartige Kühlkanäle vorhanden. Somit ist ein Platzbedarf vergleichsweise gering. Besonders bevorzugt geht jeder Kühlkanal in eine Statornut des Blechpakets über, wobei in jeder Statornut jeweils zumindest teilweise eine elektrische Spule eines jeweiligen Elektromagneten einliegt. Somit ist ein Aufwand zur Bereitstellung der Kühlkanäle verringert. Zudem ist auf diese Weise ein zusätzlicher Platzbedarf verringert und eine Herstellung vereinfacht. Ferner ist aufgrund der Kühlkanäle ein Anordnen der jeweiligen Elektrode elektrischen Spule/Wicklung in der Statornut vereinfacht. Auch wird bei Betrieb mittels des durch den jeweiligen Kühlkanal geführten Teils der Kühlflüssigkeit die jeweilige elektrische Spule zumindest teilweise gekühlt. Insbesondere weist die Axialflussmaschine zwischen 25 und 30 derartige Kühlkanäle und somit auch Statornuten auf. Bevorzugt ist die Anzahl der Kühlkanäle und daher auch der elektrischen Spulen gleich 27. Auf diese Weise ist bei Betrieb ein vergleichsweise konstantes Drehmoment erreichbar, wobei ein Aufwand verringert ist.

Beispielsweise weist die Axialflussmaschine lediglich den einzigen Stator auf. Besonders bevorzugt umfasst die Axialflussmaschine einen zweiten Stator, der ringförmig ausgestaltet ist. Der zweite Stator umgibt die Achse und ist vorzugsweise konzentrisch zu dieser. Der zweite Stator ist zu dem Rotor parallel zur Achse versetzt, wobei sich der Rotor zwischen den beiden Statoren befindet. Insbesondere sind die beiden Statoren hierbei deckungsgleich angeordnet. Der zweite Stator ist geeigneterweise baugleich zu dem Stator. Bei Betrieb wechselwirkt der Rotor somit mit jedem der beiden Statoren, sodass die auf den Rotor wirkenden Kräfte vergrößert sind. Beispielsweise umfasst die Axialflussmaschine zudem einen zweiten Rotor, der zum Beispiel mit dem zweiten Stator wechselwirkt. Besonders bevorzugt jedoch ist lediglich der einzige Rotor vorhanden, weswegen eine Baulänge der Axialflussmaschine verkürzt ist. Zusammenfassend ist aufgrund des zweiten Stators eine mittels des Axialflussmaschine bereitgestellte Leistung vergrößert, wobei lediglich der eine einzige Rotor vorhanden ist, sodass eine axiale Länge nicht übermäßig vergrößert ist.

Zweckmäßigerweise ist der zweite Stator in einem dritten Raum des Gehäuses angeordnet, wobei der zweite Raum und der dritte Raum mittels einer zweiten Spaltscheibe begrenzt und fluidtechnisch zueinander getrennt sind. Insbesondere sind die Spaltscheiben zueinander baugleich, und/oder der dritte Raum ist baugleich zu dem ersten Raum. Insbesondere ist die Axialflussmaschine spiegelbildlich oder zumindest symmetrisch bezüglich des Rotors aufgebaut, sodass vergleichsweise viele Gleichteile verwendet werden können. Auch ist auf diese Weise ein Austausch erleichtert, und eine Anzahl an vorzuhaltenden Ersatzteilen ist verringert. Zweckmäßigerweise ist der dritte Raum mittels eines dritten Teils des Gehäuses bereitgestellt, mittels dessen vorzugsweise ein Lager gehalten ist, mittels dessen die etwaige Welle drehbar gelagert ist. Insbesondere bilden hierbei der erste und der dritte Teil jeweils ein Lagerschild des Gehäuses.

Das Kraftfahrzeug ist beispielsweise landgebundenen oder flugfähig. Besonders bevorzugt jedoch ist das Kraftfahrzeug seegebunden und beispielsweise ein Schiff oder Boot. Das Kraftfahrzeug weist einen Hauptantrieb auf, der dem Vortrieb des Kraftfahrzeugs dient. Der Hauptantrieb umfasst hierbei eine flüssigkeitsgekühlte Axialflussmaschine, die einen um eine Achse drehbaren Rotor und einem um die Achse angeordneten ringförmigen Stator umfasst, die zueinander parallel zur Achse versetzt sind. Der Stator ist in einem ersten Raum eines Gehäuses und der Rotor in einem zweiten Raum des Gehäuses angeordnet, die mittels einer Spaltscheibe begrenzt und fluidtechnisch zueinander getrennt sind.

Ferner weist das Kraftfahrzeug ein Kühlkreislauf auf, der fluidtechnisch mit dem ersten Raum verbunden ist. Der Kühlkreislauf umfasst insbesondere mehrere Leitungen, von denen zumindest zwei mit dem ersten Raum fluidtechnisch verbunden sind. Bei Betrieb wird über die Leitungen Kühlflüssigkeit in den ersten Raum geleitet und aus diesem entfernt, sodass mittels der Kühlflüssigkeit ein Abtransport von Wärme aus dem ersten Raum erfolgt. Vorzugsweise weist der Kühlkreislauf eine Pumpe auf, mittels derer die Kühlflüssigkeit gepumpt wird. Vorzugsweise weist der Kühlkreislauf (Kühlmittelkreislauf) einen Wärmetauscher auf, der beispielsweise mit Umgebungsluft oder mittels Wasser, wie insbesondere Meer- oder Flusswasser, beaufschlagt ist. Somit ist eine Abkühlung der erwärmten Kühlflüssigkeit möglich.

Die im Zusammenhang mit der flüssigkeitsgekühlte Axialflussmaschine erläuterten Weiterbildungen und Vorteile sind sinngemäß auch auf das Kraftfahrzeug zu übertragen und umgekehrt.

Nachfolgend werden Ausführungsbeispiele der Erfindung anhand einer Zeichnung näher erläutert. Darin zeigen:
- Fig. 1: in einer Seitenansicht schematisch ein Kraftfahrzeug mit einem Hauptantrieb, der eine flüssigkeitsgekühlte Axialflussmaschine aufweist,
- Fig. 2: perspektivisch die Axialflussmaschine, die ein Gehäuse mit einem ersten, zweiten und dritten Teil aufweist,
- Fig. 3: in einer Schnittdarstellung entlang einer Achse die Axialflussmaschine,
- Fig. 4: perspektivisch die Axialflussmaschine, wobei der erste Teil nicht dargestellt ist,
- Fig. 5, 6: perspektivisch ein Blechpaket eines Stators der Axialflussmaschine,
- Fig. 7: perspektivisch die Axialflussmaschine, wobei weitere Komponenten nicht dargestellt sind,
- Fig. 8: einen vergrößerten Ausschnitt der Schnittdarstellung gemäß Figur 3, und
- Fig. 9, 10: perspektivisch bzw. ausschnittsweise in einer Schnittdarstellung eine alternative Ausgestaltungsform des ersten Teils.

Einander entsprechende Teile sind in allen Figuren mit den gleichen Bezugszeichen versehen.

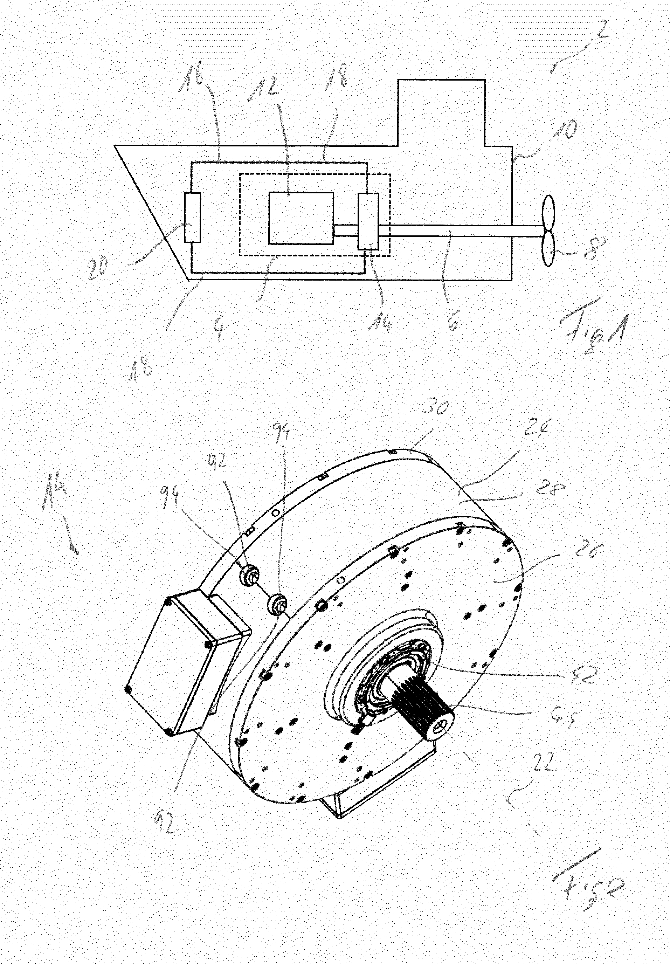

In Figur 1 ist schematisch in einer Seitenansicht ein Kraftfahrzeug 2 in Form eines Schiffs dargestellt. Das Kraftfahrzeug 2 weist einen Hauptantrieb 4 auf, mittels dessen eine Schiffswelle 6 angetrieben ist, an der endseitig eine Schiffsschraube 8 befestigt ist. Die Schiffsschraube 8 befinden sich hierbei außerhalb einer Hülle 10 des Kraftfahrzeugs 2, durch die die Schiffswelle 6 geführt ist. Mit Ausnahme der Schiffsschraube 8 sowie des durch die Hülle 10 ragenden Teils der Schiffswelle 6 sind die Komponenten des Kraftfahrzeugs 2 mittels der Hülle 10 umgeben. Folglich ist der Hauptantrieb 4 ebenfalls mittels der Hülle 10 umgeben.

Der Hauptantrieb 4 weist einen Verbrennungsmotor 12 auf, mittels dessen über ein Getriebe die Schiffswelle 6 angetrieben ist. Ferner umfasst der Hauptantrieb 4 eine Axialflussmaschine 14 die ebenfalls auf die Welle 6 wirkt. Mittels der Axialflussmaschine 14, die als Elektromotor ausgestaltet ist, wird hierbei eine Nennleistung von 200 kW sowie ein Nenndrehmoment von 1200 Nm bereitgestellt. Somit ist es möglich, mittels des Verbrennungsmotors 12 allein, mittels der Axialflussmaschine 14 allein oder mittels beider die Schiffswelle 6 zu rotieren, sodass eine Fortbewegung des Kraftfahrzeugs 2 durch Wasser erfolgt. Hierbei wird beispielsweise bei einem Manövrieren in einem Hafen lediglich die Axialflussmaschine 14 zum Antrieb der Schiffswelle 6 herangezogen, sodass eine Umweltbelastung in Hafennähe verringert ist.

Das Kraftfahrzeug 2 weist ferner einen Kühlkreislauf 16 auf, der mehrere Leitungen 18 aufweist, die fluidtechnisch mit der Axialflussmaschine 14 gekoppelt sind. Auch umfasst der Kühlkreislauf 16 eine nicht näher dargestellte Pumpe sowie einen Wärmetauscher 20, der mit dem die Hülle 10 umgebenden Wasser beaufschlagt ist. Bei Betrieb wird mittels der Pumpe durch die Leitungen 18 eine Kühlflüssigkeit, nämlich Öl, gepumpt, sodass diese durch die Axialflussmaschine 14 fließt und von einer dort vorhandenen Verlustwärme erwärmt wird. Die erwärmte Kühlflüssigkeit wird durch eine andere der Leitungen 18 zu dem Wärmetauscher 20 geleitet, wo eine Abkühlung der Kühlflüssigkeit erfolgt. Anschließend wird die abgekühlte Kühlflüssigkeit erneut zu der Axialflussmaschine 14 geleitet. Folglich handelt es sich bei der Axialflussmaschine 14 um eine flüssigkeitsgekühlte Axialflussmaschine.

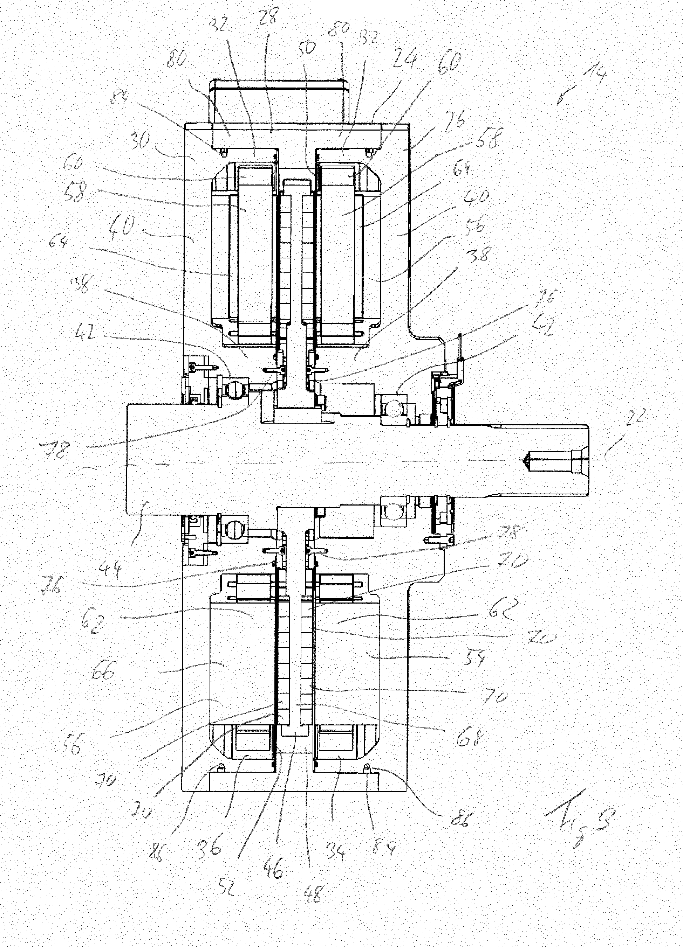

In Figur 2 ist die Axialflussmaschine 14 perspektivisch und in Figur 3 in einer Schnittdarstellung entlang einer Achse 22. Die Axialflussmaschine 14 weist ein Gehäuse 24 auf, das einen ersten Teil 26, einen zweiten Teil 28 sowie einen dritten Teil 30 umfasst. Die drei Teile 26, 28, 30 sind dabei aus einem Aluminium erstellt.

Der erste Teil 26 und der dritte Teil 30 sind jeweils topfförmig ausgestaltet, sodass diese jeweils einen umlaufenden Rand 32 aufweisen, mittels derer jeweils umfangsseitig ein erster Raum 34 bzw. ein dritter Raum 36 umgeben sind. Die Ränder 32 sind hohlzylindrisch ausgestaltet und konzentrisch zur Achse 22 angeordnet, wobei die beide Ränder 32 den gleichen runden Durchmesser senkrecht zur Achse 22 aufweisen.

Ferner weist der erste Teil 26 und der dritte Teil 30 jeweils einen hohlzylindrisch ausgestalteten Kragen 38 auf, die jeweils konzentrisch zur Achse 22 angeordnet sind, und die beide den gleichen Radius aufweisen. Hierbei ist der Abstand der Kragen 38 zu der Achse 22 geringer als der Abstand der Ränder 32 zur Achse 22. Mittels der Kragen 38 ist dabei der erste Raum 34 bzw. der dritte Raum 36 innenseitig begrenzt. Die Kragen 38 und die Ränder 32 weisen jeweils die gleiche Ausdehnung in axialer Richtung, also parallel zur Achse 22, auf und sind jeweils an einem Topfboden 40 des jeweiligen topfförmige ersten Teil 26 bzw. dritten Teils 30 angebunden, sodass jeder der beiden Teile 26, 30 eine sich in Axialrichtung gerichtete Öffnung aufweist, wobei die Öffnungen auf einander zu gewandt sind. Folglich bilden die beiden Topfböden 40 im Wesentlichen die Enden des Gehäuses 24 in Axialrichtung (axialer Richtung), also parallel zur Achse. Zusammenfassend enden somit jeder Kragen 38 und der jeweilige Rand 32 der beiden Teile 26, 30 in der gleichen Ebene senkrecht zur Achse 22.

Innerhalb jedes Kragens 38 ist jeweils ein Lager 42 eingesetzt und dort gehalten. Die beiden Lager 42 sind Wälzlager, nämlich Kugellager, und mittels dieser ist eine konzentrisch und sowie entlang der Achse 22 angeordnete Welle 44 drehbar um die Achse 22 gelagert. An der Welle 44 ist ein Rotor 46 drehfest befestigt, der in einem zweiten Raum 48 angeordnet ist. Der zweite Raum 48 befindet sich hierbei in Axialrichtung, also parallel zur Achse 22, zwischen dem ersten Raum 34 und dem dritten Raum 36 und ist mittels des zweiten Teils 28 des Gehäuses 24 bereitgestellt. Der zweite Teil 28 ist hohlzylindrisch ausgestaltet sowie konzentrisch zur Achse 22 angeordnet. Zudem ist der zweite Teil 28 an dem erste Teil 26 und dem dritte Teil 30 befestigt, wobei mittels dieser der zweite Teil 28 endseitig jeweils verschlossen ist.

Der zweite Raum 48 ist mittels einer ringförmigen Spaltscheibe 50 von dem ersten Raum 34 und mittels einer zweiten Spaltscheibe 52 von dem dritten Raum 36 abgetrennt. Mit anderen Worten wird der zweite Raum 48 auf beiden Enden in der Axialrichtung mit jeweils einer der Spaltscheiben 50, 52 begrenzt. Der erste Raum 34 wird mittels der Spaltscheibe 50 auf der dem Topfboden 40 des ersten Teils 26 gegenüberliegenden Ende in Axialrichtung begrenzt. Der dritte Raum 36 wird auf der dem Topfboden 40 des dritte Teils 30 gegenüberliegenden Seite in Axialrichtung mittels der zweite Spaltscheibe 52 begrenzt. Mittels der beiden Spaltscheiben 50, 52 erfolgt dabei eine fluidtechnische Trennung der drei damit jeweils begrenzten Räume 34, 36, 48. Die beiden Spaltscheibe 50,52 sind zueinander baugleich und aus einem glasfaserverstärkten Polyamid gefertigt. Die beiden Spaltscheiben sind senkrecht zur Achse 22 angeordnet, und die Dicke jeder Spaltscheibe 50, 52, also deren Ausdehnung parallel zur Achse 22, also deren Dicke, beträgt 1 mm.

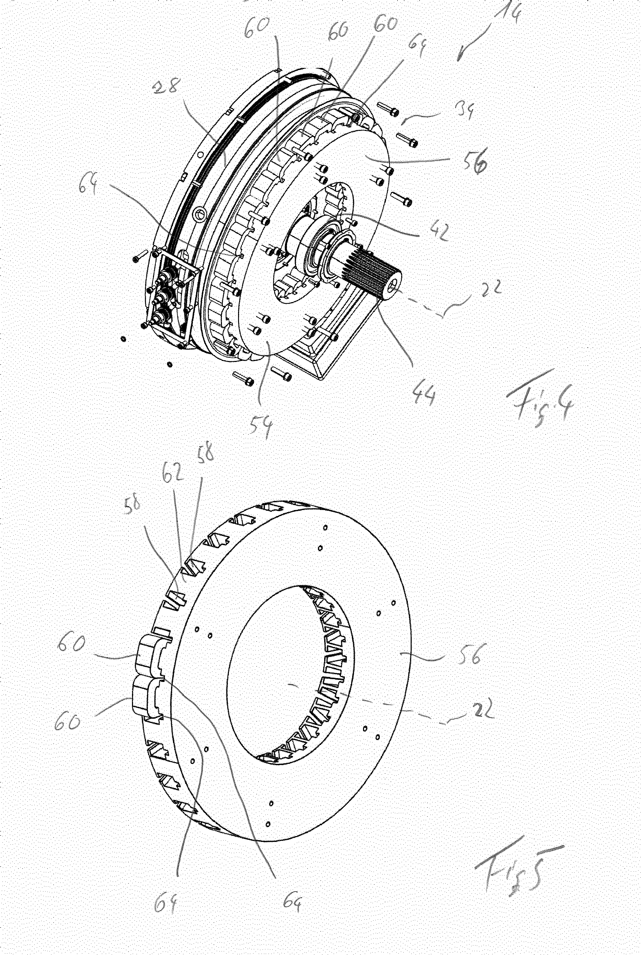

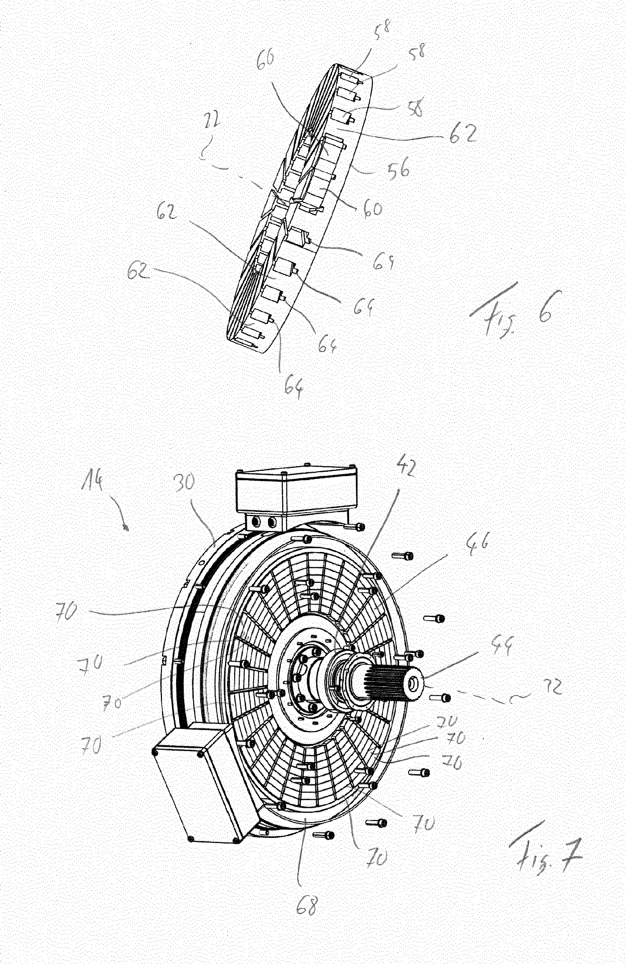

In Figur 4 ist die Axialflussmaschine 14 ohne das erste Teil 26 dargestellt, sodass der erste Raum 34 sichtbar ist. Innerhalb des ersten Raums 34 ist ein ringförmiger Stator 54 angeordnet, der konzentrisch zur Achse 22 angeordnet ist. Der Stator 54 weist ein ringförmiges Blechpaket 56 auf, das in den Figuren 5 und 6 aus unterschiedlichen Perspektiven dargestellt ist. Das Blechpaket 56 umfasst mehrere nicht näher dargestellte Blechlagen, die konzentrisch angeordnet sind und sich jeweils umfangsseitig umgeben. Durch das Blechpaket 56 sind insgesamt 27 Statornuten 58 geführt, die bezüglich der Achse 22 in radialer Richtung (Radialrichtung) verlaufen. Mit anderen Worten ist jede der Statornuten 58 entlang einer Geraden angeordnet, die die Achse 22 unter einem Winkel von 90° schneidet, wobei sämtliche Geraden in einer gemeinsamen Ebene senkrecht zur Achse 22 angeordnet sind.

In jeder der Statornuten 58 liegen jeweils teilweise zwei unterschiedliche elektrische Spulen 60 ein, von denen in Figur 5 und 6 jeweils lediglich zwei dargestellt sind, und die jeweils aus einem lackierten Kupferlackdraht erstellt sind. Jede elektrische Spule 60 ist um einen jeweiligen jeweils zwischen zwei der Statornuten 58 gebildeten Zahn 62 des Blechpakets geschlungen. Folglich sind 27 derartige elektrische Spulen 60 vorhanden.

Das Blechpaket 56 weist ferner 27 Kühlkanäle 64 auf, von denen jeder jeweils einer der Statornuten 58 zugeordnet ist. Jeder Kühlkanal 64 verläuft in radialer Richtung und schließt sich an die jeweilige Statornuten 58 in Axialrichtung an, sodass jeder Kühlkanal 64 in jeweils eine der Statornuten 58 des Blechpaket 56 übergeht. Hierbei befinden sich die Kühlkanäle 64 auf der dem Topfboden 40 des ersten Teils 26 zugewandten Seite der jeweiligen Statornut 58. Die Ausdehnung der Kühlkanäle 64 in tangentialer Richtung bezüglich der Achse 22 ist dabei geringer als diejenige der Statornuten 58, und die Kühlkanäle 64 sind frei von den elektrischen Spulen 60.

In dem dritten Raum 36 ist ein zweiter Stator 66 angeordnet, der baugleich zu dem Stator 54 und spiegelbildlich bezüglicher einer Ebene senkrecht zur Achse 22 angeordnet ist. So weist der zweite Stator 66 ebenfalls das Blechpaket 56 mit den 27 elektrischen Spulen 60 und den zugeordneten Statornuten 58 und Zähnen 62 sowie den Kühlkanälen 64 auf. Hierbei sind die Kühlkanäle 64 auf der dem Topfboden 40 des dritten Teils 30 zugewandten Seite der jeweiligen Statornuten 58 angeordnet. Aufgrund der Anordnung in dem dritten Raum 36 sind somit die beiden Statoren 54, 66 parallel zur Achse 22 zueinander versetzt, wobei sich zwischen diesen der Rotor 46 befindet, der zu dem Stator 54 und dem zweite Stator 66 parallel zur Achse 22 versetzt ist.

In Figur 7 ist perspektivisch die Axialflussmaschine 14 gezeigt, wobei der Stator 54 sowie das erste Teil 26 nicht dargestellt sind, sodass der Rotor 46 sichtbar ist. Der Rotor 46 weist ein Blechpaket 68 auf, das drehfest an der Welle 44 befestigt ist. Mittels des Blechpakets 68 des Rotors 46 sind mehrere Permanentmagnete 70 gehalten, deren Magnetisierungsrichtung parallel zur Achse 22 ist. Bei Bestromung der elektrischen Spulen 60 der beiden Statoren 54, 66 wechselwirken die damit erstellten Magnetfelder mit den mittels der Permanentmagneten 70 erstellten Magnetfeldern, sodass der Rotor 46 bezüglich der fest an dem Gehäuse 24 befestigten Statoren 54, 66 rotiert wird. Infolgedessen wird auch die Welle 44 in eine Rotationsbewegung um die Achse 22 versetzt.

Zusammenfassend weist die Axialflussmaschine 14 somit den um die Achse 22 drehbaren Rotor 46 und die um die Achse 22 angeordneten ringförmigen Statoren 54, 66 auf, die jeweils zueinander parallel zur Achse 22 versetzt sind. Hierbei befindet sich der Rotor 46 zwischen den beiden Statoren 54, 66 in Axialrichtung. Der Stator 54 ist in dem ersten Raum 34 des Gehäuses 24, der Rotor 46 in dem zweiten Raum 48 des Gehäuses 24 und der zweite Stator 66 in dem dritten Raum 36 des Gehäuses 24 angeordnet. Dabei sind der erste Raum 34 und der zweite Raum 48 mittels der Spaltscheibe 50 begrenzt und fluidtechnisch zueinander getrennt. Der zweite Raum 48 und der dritte Raum 36 sind mittels der zweiten Spaltscheibe 52 begrenzt und fluidtechnisch zueinander getrennt.

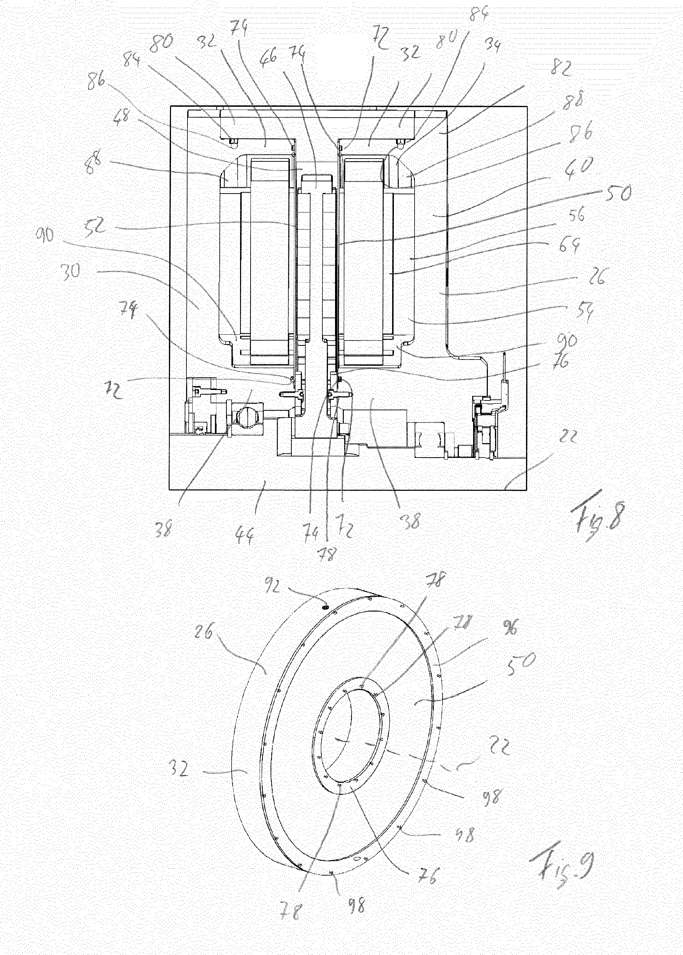

Wie in Figur 8 in einer vergrößerten Schnittdarstellung ausschnittsweise gezeigt ist, ist die Spaltscheibe 50 stirnseitig auf den umlaufenden Rand 32 des ersten Teils 26 aufgesetzt und mit diesem verklebt. Auch ist die ringförmige Spaltscheibe 50 auf die Stirnseite, also dem Topfboden 40 abgewandten Teil des Kragens 38 aufgesetzt und dort mit diesem verklebt. Dabei ist in die Stirnseite des umlaufenden Rands 32 sowie des Kragens 38 jeweils eine Nut 72 eingebracht, die ringförmig ist, und deren Öffnung dem Topfboden 40 abgewandt ist. Innerhalb jeder Nut 72 liegt jeweils ein Dichtring 74 ein, der nach Art eines O-Rings ausgestaltet und aus einem Gummi gefertigt ist. Dabei weist der dem Kragen 38 zugeordnete Dichtring 74 sowie die zugeordnete Nut 72 im Vergleich zu dem dem Rand 32 zugeordneten Dichtring 74 und entsprechenden Nut 72 verringerten Radius auf. Ansonsten hingegen sind diese zueinander baugleich. Zusammenfassend liegt somit an dem umlaufenden Rand 32 der Dichtring 74 an, und auf den umlaufenden Rand 32 des ersten Teils 26 ist die Spaltscheibe 50 aufgesetzt.

In dem zweiten Raum 48 ist ein Befestigungsring 76 angeordnet, der aus einem Stahl erstellt ist, und dessen Außenradius größer als der Radius des Dichtring 74 und dessen Innenradius kleiner als der Radius des Dichtrings 74 ist. Der Befestigungsring 76 ist mittels mehrerer Befestigungsschrauben 78 an dem Kragen 38 befestigt, wobei die Befestigungsschrauben 78 im Wesentlichen parallel zur Achse 22 angeordnet und durch den Befestigungsring 76 hindurch in den Kragen 38 geschraubt sind. Dabei sind die Befestigungsschrauben 78 nicht durch die Spaltscheibe 50 hindurchgeführt, und weisen somit einen geringeren Abstand zur Achse 22 auf als der Innendurchmesser der Spaltscheibe 50 ist.

Mittels der die Befestigungsschrauben 78 wird die Spaltscheibe 50 kraftschlüssig zwischen dem Kragen 38 und dem Befestigungsring 76 gehalten. Somit ist der erste Raum 34 innenseitig fluidtechnisch von dem zweiten Raum 48 abgetrennt, und auch bei einer Belastung ist ein Ablösen der Spaltscheibe 50 von dem Kragen 38 verhindert. Folglich ist eine Robustheit erhöht ist. Zusammenfassen weist der erste Teil 26 den innerhalb des Stators 54 umlaufenden und konzentrisch zur Achse 22 angeordneten Kragen 38 auf, mittels dessen der erste Raum 34 innenseitig begrenzt ist, wobei in dem zweite Raum 48 der Befestigungsring 76 angeordnet ist, der mittels der Befestigungsschrauben 78 an dem Kragen 38 befestigt ist, wobei die Spaltscheibe 50 kraftschlüssig zwischen dem Kragen 38 und dem Befestigungsring 74 gehalten ist.

An der radialen Außenseite liegt der zweite Teil 28 kraftschlüssig über die Spaltscheibe 50 an dem umlaufenden Rand 32 an, sodass mittels des zweiten Teils 28 ein Ablösen der Spaltscheibe 50 von dem Rand 32 vermieden ist. Zudem weist der zweite Teil 28 einen Überstand 80 auf, mittels dessen der umlaufenden Rand 32 des ersten Teils 26 umlaufend umgegriffen ist. Somit umgreift der zweite Teil 28 teilweise den ersten Teil 26 umfangsseitig mittels des Überstands 80, der nach Art eines Hohlzylinders ausgestaltet ist, und der stirnseitig an einem Fortsatz 82 des erste Teils 26 anliegt, der in einer Ebene mit dem Topfboden 40 des ersten Teils 26 liegt und den Rand 32 in radialer Richtung überragt. Somit ist zwischen dem ersten Teil 26 und dem zweiten Teil 28 eine Labyrinthdichtung gebildet. Ferner ist in den umlaufenden Rand 32 umfangsseitig eine weitere Nut 84 eingebracht, innerhalb derer ein weitere Dichtring 86 einliegt. Somit ist eine Dichtigkeit weiter verbessert.

Die zweite Spaltscheibe 52 ist in gleicher Art und Weise an dem dritten Teil 30 befestigt wie die Spaltscheibe 50 an dem ersten Teil 26. Somit weist der dritte Teil 30 ebenfalls die Nuten 72 auf, in denen entsprechende Dichtringe 74 einliegen. Auch sind die weitere Nut 84 und der weitere Dichtring 86 vorhanden, der zwischen einem entsprechenden Überstand 80 des dritten Teils 30 und dem entsprechenden umlaufenden Rand 32 angeordnet ist. Folglich weist der zweite Teil 28 zwei derartige Überstände 80 auf, wobei mittels eines von denen der umlaufende Rand 32 des dritten Teils 30 umgriffen ist. Auch ist die zweite Spaltscheibe 52 mittels eines entsprechenden Befestigungsrings 76 an dem Kragen 38 des dritte Teils 30 kraftschlüssig gehalten.

Das Blechpaket 56 des Stators 54 liegt mit einer dessen Stirnseiten an dem Topfboden 40 des ersten Teils 26 an und ist dort befestigt. Die andere Stirnseite liegt an der Spaltscheibe 50 an und ist an dieser befestigt. Somit wird die Spaltscheibe 50 mittels des Blechpakets 56 stabilisiert, wobei die Stabilisierung des Blechpakets 56 mittels des erste Teils 26 erfolgt. Aufgrund der Anlage ist der erste Raum 36 in einen das Blechpaket 56 umgebenden ersten Teilraum 88 und einen von dem Blechpaket 56 umgebenden zweiten Teilraum 90 aufgeteilt, der somit innerhalb des Blechpakets 56 liegt. Die fluidtechnische Verbindung zwischen den beiden Teilräumen 88, 90, die konzentrisch zur Achse 22 angeordnet sind, und zwischen denen in Radialrichtung das Blechpaket 56 angeordnet ist, erfolgt mittels der Kühlkanälen 64 die durch das Blechpaket 56 verlaufen. Der zweite Stator 66 ist in gleicher Art und Weise an dem dritten Teil 30 sowie der zweiten Spaltscheibe 52 befestigt sowie entsprechend in dem dritten Raum 36 angeordnet, sodass auch dort ein erster Teilraum 88 und ein zweiter Teilraum 90 gebildet sind.

Jeder erste Teilraum 88 ist mittels einer in den jeweiligen zugeordneten Rand 32 eingebrachte Öffnung 92 sowie einer damit fluchtenden Öffnung 94 des entsprechenden Überstands 80 des zweiten Teils 28 fluidtechnisch mit einer der Leitungen 18 des Kühlkreislaufs 16 verbunden, sodass mittels der beiden Öffnungen 92, 94 jeweils ein Zufluss zu dem ersten Raum 34 bzw. dem zweiten Raum 36 gebildet ist. Die beiden zweiten Teilräumen 90 sind mittels nicht näher dargestellter Öffnungen mit einer anderen der Leitungen 18 des Kühlkreislaufs 16 fluidtechnisch verbunden.

Bei Bestromung der elektrischen Spulen 60 der Statoren 54, 66 entstehen elektrische Verluste, die zu einer Erwärmung dieser ausführen. Mittels der über die Öffnungen 92, 94 einströmenden Kühlflüssigkeit werden die beiden Statoren 54, 66 jeweils umfangsseitig umspült und folglich dort mittels der Kühlflüssigkeit gekühlt. Die Kühlflüssigkeit wird über die Kühlkanäle 64 in den jeweiligen zweiten Teilraum 90 weitergeleitet, sodass mittels der Kühlflüssigkeit das Blechpaket 56 als auch die elektrischen Spulen 60 gekühlt werden. Sobald die Kühlflüssigkeit im zweiten Teilraum 90 angekommen ist, wird auch dort mittels dieser der jeweilige Stator 54, 66 umspült und teilweise gekühlt. Über die nicht näher dargestellten Öffnungen wird anschließend die erwärmte Kühlflüssigkeit zu der entsprechenden Leitung 18 geleitet und von dort zu dem Wärmetauscher 20. Folglich wird mittels der Kühlflüssigkeit eine vergleichsweise große Oberfläche des jeweiligen Stators 54, 66 beaufschlagt, sodass eine vergleichsweise effektive Kühlung erfolgt, wobei kein Übertritt der Kühlflüssigkeit in den zweiten Raum 48 erfolgt. Somit treten bei Rotation des Rotors 46 keine Planschverluste auf, weswegen ein Wirkungsgrad der Axialflussmaschine 14 nicht geschmälert ist.

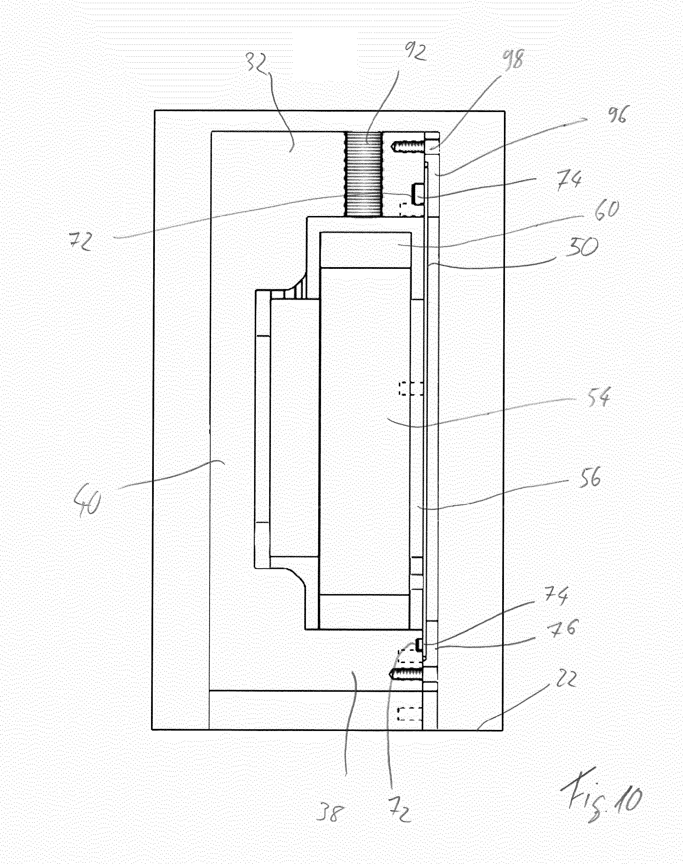

In Figur 9 ist perspektivisch und in Figur 10 in einer Schnittdarstellung entlang der Achse 22 eine alternative Ausgestaltungsform des ersten Teils 26 dargestellt. Hierbei bildet der Rand 32 die umfangsseitige Begrenzung des ersten Teils 26. Mit anderen Worten ist bei dieser Ausgestaltungsform der Axialflussmaschine 14 der Überstand 80 des zweiten Teils 28 nicht erforderlich und nicht vorhanden. Die Spaltscheibe 50 ist nicht verändert, und der Kragen 38 ist auch weiterhin vorhanden, an dem mittels des unveränderten Befestigungsring 76 die Spaltscheibe 50 kraftschlüssig gehalten ist. Auch hier sind wiederum die Befestigungsschrauben 78 vorhanden, mittels derer der Befestigungsring 76 mit dem Kragen 38 verschraubt ist. Auch bei dieser Ausgestaltungsform liegt die Spaltscheibe 50 über die Dichtringe 74, die in den entsprechenden Nuten 72 angeordnet sind, sowohl an dem Kragen 38 als auch an dem Rand 32 an und ist an deren Stirnseiten angeklebt.

Es ist ein senkrecht zur Achse 22 angeordneter weiterer Befestigungsring 96 vorhanden, dessen Außendurchmesser dem Außendurchmesser des Rands 32 und dessen Innendurchmesser dem Innendurchmesser des Rands 32 entspricht. Der weitere Befestigungsring 96 ist aus dem gleichen Material wie der Befestigungsring 76 gefertigt und mittels weiterer Befestigungsschrauben 98 an dem Rand 32 angeschraubt, wobei die weiteren Befestigungsschrauben 98 im Wesentlichen parallel zur Achse 22 angeordnet sind und durch den weiteren Befestigungsring 96 reichen. Die Spaltscheibe 50 ist mittels der weiteren Befestigungsschrauben 98 kraftschlüssig zwischen dem weiteren Befestigungsring 96 und der Stirnseite des Rands 32 gehalten.

Das Blechpaket 56 des Stators 54 liegt an der Spaltscheibe 50 an und ist von dem Topfboden 40 beabstandet. Auch sind die Kühlkanäle 64 nicht vorhanden. Bei Betrieb wird mittels der über die Öffnung 92 eintretenden Kühlflüssigkeit somit das Blechpaket 56 auch an einer der Stirnseiten umspült, sodass dort eine vergleichsweise effektive Kühlung erfolgt. Jedoch erfolgt keine Kühlung des Inneren des Blechpakets 56 wie bei der vorherigen Ausgestaltungsform. Bei dieser Ausgestaltungsform ist es möglich, das erste Teil 26 mit der daran befestigten Spaltscheibe 50 und dem umschlossenen Stator 54 als Modul zu fertigen.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den einzelnen Ausführungsbeispielen beschriebene Einzelmerkmale auch auf andere Weise miteinander kombinierbar, ohne den Gegenstand der Erfindung zu verlassen.

### Bezugszeichenliste

- 2: Kraftfahrzeug
- 4: Hauptantrieb
- 6: Schiffswelle
- 8: Schiffsschraube
- 10: Hülle
- 12: Verbrennungsmotor
- 14: Axialflussmaschine
- 16: Kühlkreislauf
- 18: Leitung
- 20: Wärmetauscher
- 22: Achse
- 24: Gehäuse
- 26: erster Teil
- 28: zweiter Teil
- 30: dritter Teil
- 32: umlaufender Rand
- 34: erster Raum
- 36: dritter Raum
- 38: Kragen
- 40: Topfboden
- 42: Lager
- 44: Welle
- 46: Rotor
- 48: zweiter Raum
- 50: Spaltscheibe
- 52: zweite Spaltscheibe
- 54: Stator
- 56: Blechpaket
- 58: Statornut
- 60: elektrische Spule
- 62: Zahn
- 64: Kühlkanal
- 66: zweiter Stator
- 68: Blechpaket des Rotors
- 70: Permanentmagnet
- 72: Nut
- 74: Dichtring
- 76: Befestigungsring
- 78: Befestigungsschraube
- 80: Überstand
- 82: Fortsatz
- 84: weitere Nut
- 86: weiterer Dichtring
- 88: erster Teilraum
- 90: zweiter Teilraum
- 92: Öffnung des Rand
- 94: Öffnung des zweiten Teils
- 96: weiterer Befestigungsring
- 98: weitere Befestigungsschraube

## Patentansprüche

1. Flüssigkeitsgekühlte Axialflussmaschine (14) mit einem um eine Achse (22) drehbaren Rotor (46) und einem um die Achse (22) angeordneten ringförmigen Stator (54), die zueinander parallel zur Achse (22) versetzt sind, wobei der Stator (54) in einem ersten Raum (34) eines Gehäuses (24) und der Rotor (46) in einem zweiten Raum (48) des Gehäuses (24) angeordnet sind, die mittels einer Spaltscheibe (50) begrenzt und fluidtechnisch zueinander getrennt sind.

2. Flüssigkeitsgekühlte Axialflussmaschine (14) nach Anspruch 1,
**dadurch gekennzeichnet,**
**dass** das Gehäuse (24) einen topfförmigen ersten Teil (26), mittels dessen der erste Raum (36) bereitgestellt ist, und einen hohlzylindrischen zweiten Teil (28) aufweist, mittels dessen der zweite Raum (48) bereitgestellt ist, wobei stirnseitig auf einen umlaufenden Rand (32) des ersten Teils (26) die Spaltscheibe (50) aufsetzt ist.

3. Flüssigkeitsgekühlte Axialflussmaschine (14) nach Anspruch 2,
**dadurch gekennzeichnet,**
**dass** stirnseitig an dem umlaufenden Rand (32) ein Dichtring (74) anliegt.

4. Flüssigkeitsgekühlte Axialflussmaschine (14) nach Anspruch 2 oder 3,
**dadurch gekennzeichnet,**
**dass** der zweite Teil (28) kraftschlüssig über die Spaltscheibe (50) stirnseitig an dem umlaufenden Rand (32) anliegt.

5. Flüssigkeitsgekühlte Axialflussmaschine (14) nach einem der Ansprüche 2 bis 4,
**dadurch gekennzeichnet,**
**dass** der zweite Teil (28) den ersten Teil (26) umfangsseitig mittels eines Überstands (80) umgreift.

6. Flüssigkeitsgekühlte Axialflussmaschine (14) nach einem der Ansprüche 2 bis 5,
**dadurch gekennzeichnet,**
**dass** der erste Teil (26) einen innerhalb des Stators (54) umlaufenden und konzentrisch zur Achse (22) angeordneten Kragen (38) aufweist, mittels dessen der erste Raum (34) innenseitig begrenzt ist, wobei ein in dem zweiten Raum (48) angeordneter Befestigungsring (76) an dem Kragen (38) befestigt ist, und wobei die Spaltscheibe (50) kraftschlüssig zwischen dem Kragen (38) und dem Befestigungsring (76) gehalten ist.

7. Flüssigkeitsgekühlte Axialflussmaschine (14) nach einem der Ansprüche 1 bis 6,
**dadurch gekennzeichnet,**
**dass** der Stator (54) ein um die Achse (22) angeordnetes ringförmiges Blechpaket (56) aufweist, das stirnseitig einerseits an der Spaltscheibe (50) und andererseits an dem Gehäuse (24) derart anliegt, dass der erste Raum (36) in einen das Blechpaket (56) umgebenden ersten Teilraum (88) und einen innerhalb des Blechpakets (56) liegenden zweiten Teilraum (90) aufgeteilt ist, wobei die Teilräume (88, 90) mittels durch das Blechpaket (56) verlaufender Kühlkanäle (64) miteinander fluidtechnisch verbunden sind.

8. Flüssigkeitsgekühlte Axialflussmaschine (14) nach Anspruch 7,
**dadurch gekennzeichnet,**
**dass** jeder Kühlkanal (64) in eine Statornut (58) des Blechpakets (56) übergeht.

9. Flüssigkeitsgekühlte Axialflussmaschine (14) nach einem der Ansprüche 1 bis 8,
**gekennzeichnet durch**
einen um die Achse (22) angeordneten ringförmigen zweiten Stator (66), der zu dem Rotor (46) parallel zur Achse (22) versetzt ist, wobei sich der Rotor (46) zwischen den beiden Statoren (54, 66) befindet, wobei der zweite Stator (66) in einem dritten Raum (36) des Gehäuses (24) angeordnet ist, und wobei der zweite Raum (48) und der dritte Raum (36) mittels einer zweiten Spaltscheibe (52) begrenzt und fluidtechnisch zueinander getrennt sind.

10. Kraftfahrzeug (2) mit einem Hauptantrieb (4), der eine flüssigkeitsgekühlte Axialflussmaschine (14) nach einem der Ansprüche 1 bis 9 aufweist, und mit einem Kühlkreislauf (16), der fluidtechnisch mit dem ersten Raum (34) verbunden ist.
